# EUROPEAN PATENT APPLICATION

(11) **EP 4 386 228 A1**
(43) Date of publication of application: **19.06.2024**
(21) Application number: 22213468.6
(22) Date of filing: 14.12.2022
(51) Int. Cl.: F16D 55/226, F16D 55/228, F16D 65/095, F16D 65/097

(54) **PAD FIXATION FOR A DISC BRAKE**

(71) Applicant: KNORR-BREMSE Systeme für Nutzfahrzeuge GmbH, 80809 München (DE)
(72) Inventor: ADAMCZYK, Philipp, 82347 Bernried (DE); BLESSING, Michael, 80687 München (DE); GYÖRKE, Zsombor, 8360 Keszthely (HU); HEIGL, Korbinian, 80939 München (DE); HÖS, Levente, 1047 Budapest (HU); HOLLOSI, Mate, 1097 Budapest (HU); KLINGNER, Matthias, 82276 Adelshofen (DE); KOKREHEL, Csaba, 1119 Budapest (HU); KRÜGER, Sven Philip, 81476 München (DE); MONORI, Gyula, 6065 Lakitelek (HU); NAKAMURA, Tatsuro, 1027 Budapest (HU); PESCHEL, Michael, 82296 Schöngeising (DE); TOTH, Janos, 6000 Kecskemét (HU); TOTH-KATONA, Tamas, 1039 Budapest (HU); SCHÖFBERGER, Tobias, 84048 Mainburg (DE); SZABO, Janos, 1101 Budapest (HU)

(57) **Abstract**

A disc brake (D) according to the present invention comprises:
a caliper (1),
a brake pad (3),
a pad backplate (4)
a first recessed portion (2a) formed in the caliper (1), the first recessed portion (2a) adapted to receive at least a part of the brake pad (3) and/or the pad backplate (4),
wherein there is a clearance between the contours of the first recessed portion (2a) and the pad backplate (4) in the tangential direction on at least one side,
a pad fixation means (5), which is provided on the side of the first recessed portion (2a) not pointing away from the middle axis of the disc brake (D), being adapted to push the pad backplate (4) into the radial direction pointing away from the middle axis of the disc brake (D).

By providing the first recessed portion (2a) formed in the caliper (1), the machining of the interfaces of the outboard brake pad (3) or pad backplate (4) with the caliper (1) can be performed in a simple and a cost-effective way. Furthermore, such solution provides a possibility to provide an active caliper release, in particular by a spreading device (6).

Furthermore, radial space can be saved, as the caliper (1) design can be kept compact.

## Description

The present invention deals with the fixation of an outboard brake pad of a disc brake for a commercial vehicle, in particular for a separate parking brake with an individual caliper.

Calipers for brake systems for commercial vehicles can be designed in different ways.

For example, there is the floating caliper design (variants thereof also called frame caliper or fist caliper), wherein the outboard brake pad (that means the brake pad that is positioned on the opposite side of the actuating unit) is guided in tangential and radial direction by a carrier. Regularly, the carrier is statically fixed to the axle body and hence supports the reaction forces exerted by the brake torque in tangential direction.
The outboard brake pad is guided in the carrier in such a way that it can axially move (that means in the direction of the axis extending through the brake disc), so that a proper function of the floating caliper is achieved. The outboard brake pad is pressed from behind the pad backplate with a dedicated surface on the caliper, which exerts the clamping force onto the pad.

From prior art document EP 2 698 554 A1 a disc brake is known. Said document discloses a brake disc, a brake caliper arranged to straddle the back disc, a brake caliper mount arranged to receive the brake caliper and a brake pad, wherein the caliper mount includes brake pad abutment portions arranged to limit the motion of the brake pad in a circumferential direction of a brake disc.

The support of the outboard brake pad against the carrier in a radial direction (i.e. the direction from the axle of the disc to the outside of the disc) is normally achieved with corresponding surfaces between brake pad and carrier, in particular on one side a pad retainer spring and a respective surface on the other side. The spring is for example compressed by a pad retainer bracket, and by the spring it exerts a pre-extension force on the surface. The pads can have a clearance with respect to the carrier, to allow the axial movement of the pad and in particular an easy pad exchange, for example when the pads are worn out. The pre-tensioned force from the pad retainer spring ensures that the pads do not vibrate in the clearance because of, for example, wheel induced excitations, being important to reduce NVH (noise, vibration and harshness) emissions.

Another option are fixed caliper brakes, herein the pads are normally guided in the fixed caliper with the help of pins. In this case, the fixed caliper is mounted to the axial body, and, hence, is not movable, and the pads are regularly actuated from both sides by hydraulic pistons. Such systems are mainly used for passenger cars.

In order to ensure that the pads get retracted when the brake pistons retract, the pad backplates can have a glue layer, which interacts with the hydraulic piston faces. Alternatively, the pad backplates can be equipped with springs that click axially into the pistons that have hollow recesses, to connect them.

Another option are floating caliper designs without a carrier support at the outboard brake pad. Herein, the outboard brake pad is guided in the floating caliper by corresponding surfaces, with which the outboard brake pad backplates stand in contact with. For example, the surfaces can be milled with an angle-head disc cutter mill, which is an expensive tool, and also such tool suffers from a fast wear-down. Furthermore, the access with said tool to the cast caliper is difficult in most cases. The radial fixation in such a brake system is ensured by a protrusion on the backplate of the outboard brake pad and a recess in the caliper. A falling-out to the top of the frame-caliper is prevented by a pad retainer bracket.

In other systems, a separate floating caliper without a carrier support at the outboard brake pad is used, in particular for a separate parking brake. Such systems are mainly used for passenger cars, and there is a purely mechanic transfer of clamping forces. The brake pads are for example mounted with pins (this is a similar solution as mentioned above with the fixed caliper brakes), and all forces (the tangential, radial and axial direction) are transmitted by the floating caliper, however in particular the tangential reacting forces lead to the result that the brake torque must be transferred over the floating caliper bearings. An increased force-lever in comparison to a direct support of the outboard brake pad by a carrier results from this design in such cases. Also, the system of an active caliper release exists. Springs are used between the pads and the brake carrier, and hence a problem of floating calipers can be avoided: When the clamping force of the brake actuator is removed, the inboard brake pad gets retracted or pushed back away from the disc by an active caliper release mechanism, and also the outboard brake pad gets pushed away from the disc. There is a clear separation of the friction pairing in this case. However, for the correct function of the active caliper release, a fixed point (in relation to the disc) is commonly needed. Such a clear separation of the pads and the disc is important to achieve a zero drag torque of the disc in non-actuated driving conditions, in particular regarding the aspect of fuel-efficiency of the vehicle and the cold wear of the pads and disc, which shall be minimized, which is in particular important for commercial vehicles.

A technical problem of the present application can hence be seen in that space around the rim shall be saved, in particular around the brake disc. A further problem can be seen in saving caliper installation space if a separate park brake caliper is used, while keeping the machining of the caliper, in particular of the outboard side, easy. A side-aspect is a possibility of a clear separation of the friction pairing (i.e. the inboard brake pad and the outboard brake pad) after brake actuation.

The technical problem of the present invention is solved by a disc brake according to claim 1, and advantageous uses of a disc brake according to claims 13 and 14. Further advantageous embodiments of the present invention are subject-matter of the dependent claims.

A disc brake according to the present invention comprises:
a caliper,
a brake pad,
a pad backplate,
a first recessed portion formed in the caliper, the first recessed portion being adapted to receive at least a part of the brake pad and/or the pad backplate,
wherein there is a clearance between the contours of the first recessed portion and the pad backplate in the tangential direction on at least one side of the pad backplate (the tangential direction is the direction of a tangent to the brake disc),
a pad fixation means, which is provided on the side of the first recessed portion not pointing away from the middle axis of the disc brake, being adapted to push the pad backplate into the radial direction pointing away from the middle axis of the disc brake.

There might be a clearance between the contours of the first recessed portion (the clearance being closed as soon as the pad spring is mounted) and the pad backplate on the side of the first recessed portion pointing away from the middle axis of the disc brake in the radial direction (the radial direction is the direction pointing away from the middle axis of a disc brake and brake disc),

Herein, the brake pad and the pad backplate, in particular those ones for the outboard brake pad, can be mounted to the caliper directly. A carrier that extends to the outboard brake pad is not needed according to a disc brake according to the present invention.

Furthermore, by providing a first recessed portion formed in the caliper, the machining of the interfaces of the outboard brake pad with a caliper can be performed in a simple and a cost-effective way. Furthermore, such solution provides a possibility to provide an active caliper release, in particular by a spreading device. Furthermore, radial space can be saved, as the caliper design (not needing a carrier support at the outboard side) can be kept compact.

In particular, as the brake pad and its respective pad backplate are mounted and connected directly to the caliper, corresponding surfaces in the tangential direction have to be available in the caliper. The tangential direction is related to the brake disc. Furthermore, in the radial direction on the top of the outboard brake pad, in particular the direction facing away from the wheel axis, there are also corresponding surfaces to the caliper, which can be machined easily. In the radial direction on the bottom (i.e. the side facing the axis), the brake pad, in particular the outboard brake pad, is supported by a pad fixation means, which is secured to the caliper. The actual relative movement between the caliper and the brake pad, in particular outboard brake pad, is minimized, as an interface for active caliper release as well as a pad spring can be used. A radial and tangential movement and the clearance of the caliper is hence enabled, which is also necessary for the pad exchange to some extent, however, the movement of the brake pad and the pad backplate within the caliper is reduced, which is important for NVH, as described above. The corresponding surface of the caliper, in particular the first recessed portion of the caliper, can be machined with a big diameter shaft mill by accessing the cast caliper from below, i.e. the side close to the wheel axis. Cutting inserts in the shaft mill can be used to increase the lifetime of the tool and to reduce machining time and machining costs. Furthermore, the shape of the first recessed portion and the pad/pad backplate can be chosen individually, i.e. the first recessed portion can be adapted to any shape of the brake pad and the pad backplate, in particular of an outboard brake pad.

Preferably, the pad fixation means is a pad spring. Such pad spring can be mounted very easily.

More preferably, the pad spring is fixed with a pin, which is insertable through a hole into the caliper. Even more preferably, the pin is securable with a pin fixation device on the side of the caliper being opposite to the brake pad.

Even more preferably, the pin fixation device of a bolt or a clip, in particular a security clip. A washer can also be included, potentially also a spring.

The pad spring is supported by the pin, with a pin fixation device on the back, which can be pushed through the caliper. Preferably, the pin has a clearance to allow the movement of the pad backplate in the tangential and radial direction (in the clearance to the caliper).

Preferably, the caliper further comprises at least one support portion, the support portion comprising a slit for receiving the pad spring.

Hence, the pad spring can be received by the at least one support portion, and fixed with the pin within the support portion, hence holding and securing the pad spring to the caliper.

Preferably, the pad spring has two recesses, adapted to match with two respective protrusions of the pad backplate, in particular on the bottom part of the pad backplate. By such solution, it can be enabled that the pad backplate is hold and pushed by the pad spring and cannot fall out of the caliper.

Alternatively, the pad fixation means is a pad retainer bracket, which can also be mounted on the bottom end of the pad backplate.

Preferably, the first recessed portion (for receiving the pad backplate) in the caliper can be obtained via milling. Such solution makes it very easy to work on a cast caliper.

Preferably, the first recessed portion is adapted to receive the outboard brake pad with its respective backplate. In particular for an outboard brake pad, such solution can enfold the above-mentioned advantages.

More preferably, a spreading device is provided to connect the carrier with at least one backplate and with the latter one indirectly with the caliper. By such solution, the brake pad can be pushed back when the park brake actuation is not present anymore, and hence, wear and drag torque can be minimized.

Preferably, a second recessed portion is further provided within the caliper, wherein there is a step between the first recessed portion and the second recessed portion, and wherein the pad backplate also comprise a step with complementary shape. Even though the shaft mill is not able to go so deep into the caliper casting for the second recessed portion, a sufficient axial support can be provided by a machined contact surface (i.e. the first recessed portion).

Preferably, the disc brake further comprises a service brake with a respective additional caliper. The caliper that contains the park brake works in the section of the friction ring of the service brake, and the brake pads of the park brake preferably have an increased friction coefficient compared to the brake pads of the service brake.

Advantageously, a disc brake according to the present invention can be used for a park brake, in particular without a service brake included in the same caliper.

In the following, advantageous embodiments of the present invention are described in detail by the appended figures.
- Fig. 1: shows a disc brake, with a parking brake and a service brake in separate calipers.
- Fig. 2: shows an isometric view of an outboard brake pad included in a caliper.
- Fig. 3: shows a view on the caliper alone, including the contact surface to the brake pad or the brake pad backplate.
- Fig. 4: shows a back-view on the caliper according to the present invention.
- Fig. 5: shows a view from below on the caliper according to the present invention.
- Fig. 6: shows a cross-sectional view on the caliper with a pad backplate and the brake pad mounted to the caliper.
- Fig. 7: shows a top view from above on the caliper according to the present invention, herein in particular connected with a spreading device.
- Fig. 8: shows a view of a pad backplate with a brake pad together with a brake pad spring and a pin alone.
- Fig. 9: shows an isometric view of a pad backplate with a brake pad and the pad spring and pin with a securing device alone.
- Fig. 10: shows an isometric view of a second embodiment of the present invention, wherein a pad retainer bracket is used working as a pad fixation means.

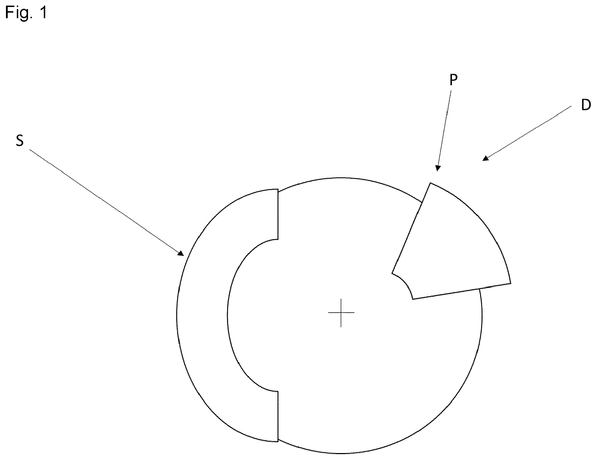

In Fig. 1, a typical arrangement of brakes of a disc brake D of a wheel are shown. Herein, a separate service brake S with a respective caliper and a parking brake P with a respective caliper are arranged at two different circumferential positions around the disc brake D.

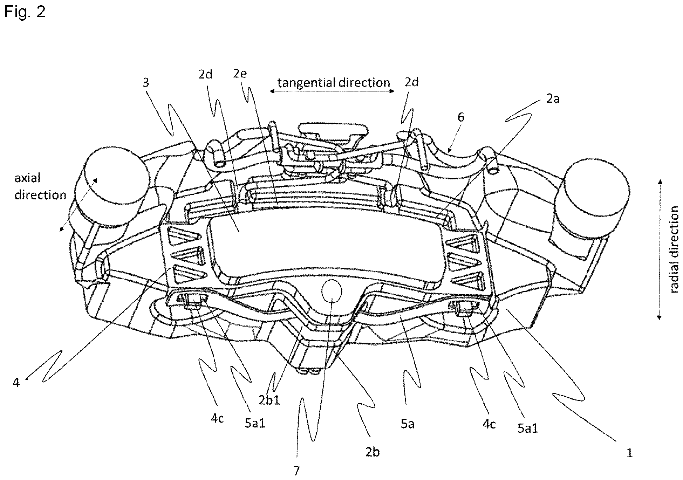

Fig. 2 shows a caliper 1 according to an embodiment of the present invention, with a milled first recessed portion 2a for receiving a pad backplate 4 with a brake pad 3. Furthermore, a spreading device 6 is provided and connected to the pad backplate 4 (the connection of the spreading device 6 to the carrier however not shown in this drawing). Furthermore, the caliper 1 comprises a support portion 2b with a slit 2b1, wherein a pad spring 5a can be received by the slit 2b1. A pin 7 can be pushed through the caliper 1, more precisely the support portion 2b, in order to secure the pad spring 5a within the caliper 1. The pad spring 5a comprises two recesses 5a1, being adapted to receive protrusions 4c of the pad backplate 4. The pad spring 5a pushes the pad backplate 4 in the radial direction, more precisely into the direction away from the wheel disc / axis (not shown here). There are two recess extensions 2d for receiving parts of the spreading device 6. Above the pad backplate 4, a second recessed portion 2e is provided in the caliper 1 - this portion is however not machined.

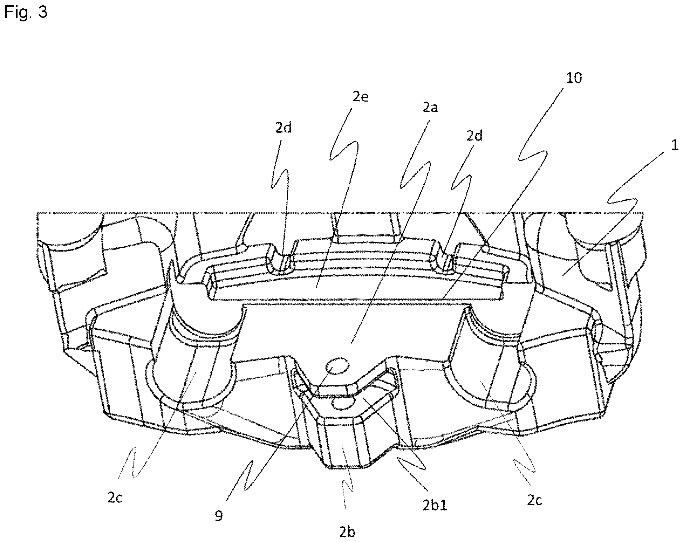

In Fig. 3, the caliper 1 without a pad backplate 4 is shown. However, the milled first recessed portion 2a is shown in detail here. There are contact surfaces of the pad backplate to the first recessed portion 2a in the caliper 1 in tangential and radial direction, being adapted to transfer the forces exerted on the brake pad 3 and pad backplate 4 to the caliper 1. The first recessed portion 2a is machined via milling. Also, the support portion 2b can be seen here, with the slit 2b1 and a hole 9 in order to receive a pin 7 (not shown in this view). Furthermore, it can be seen that there are two void spaces 2c at the right and the left side of the milled first recessed portion 2a, and hence, the pad backplate has a relatively long unsupported area, which is, however, needed for making the machining process of the caliper with a shaft mill more easy. Above the first recessed portion 2a, there is a second recessed portion 2e, which is however not machined, but left in its cast state. Above the second recessed portion 2e, two recess extensions 2d for receiving parts of the spreading device 6 (not shown in this figure) are provided. There is a step 10 between the first recessed portion 2a and the second recessed portion 2e.

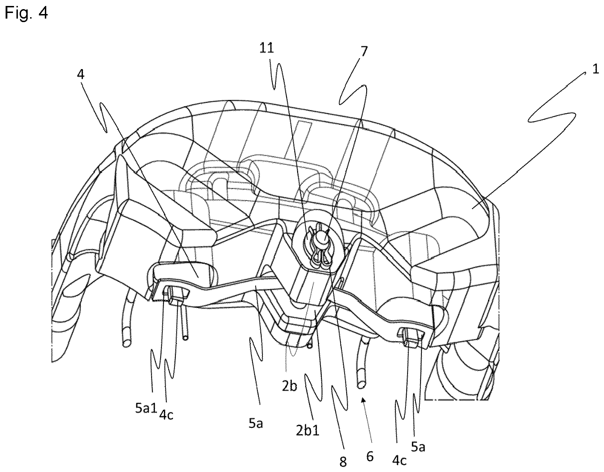

Fig. 4 shows a view on the caliper 1 from the back side. It can be seen that the pad spring 5a holds the pad backplate 4. In particular, recesses 5a1 in the pad spring 5a engage with protrusions 4c of the pad backplate 4. Furthermore, the support portion 2b can be seen provided with the slit 2b1. Herein, a pin 7 is pushed through a hole (not shown in this view) through the support portion 2b, and on the backside, the pin 7 is secured with a pin fixation device 8 (in this case a clip 8 together wish a washer 11). Furthermore, a part of a spreading device 6 is shown, however not the connection to the pad backplate 4 or the carrier in this view.

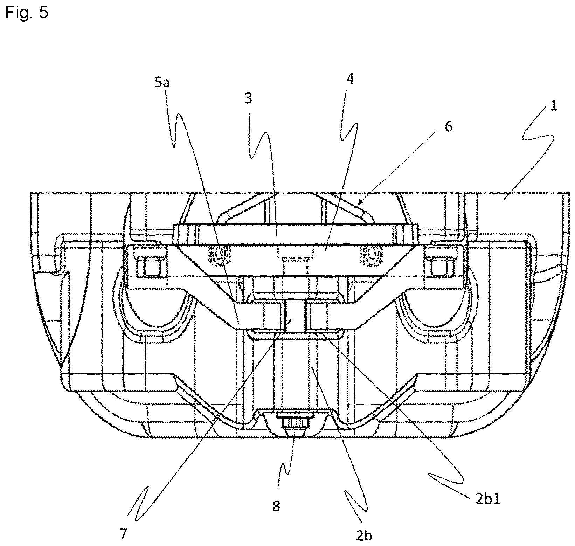

In Fig. 5, a view from the bottom on a caliper 1 according to the present embodiment according to the invention can be seen. It can be seen that a pad backplate 4 and a brake pad 3 are arranged within the caliper 1. Also parts of a spreading device 6 can be seen. The pin 7 is pushed through the caliper 1, in particular through the support portion 2b. Also, it can be seen that a slit 2b1 in the support portion 2b is provided for receiving and fixing the pad spring 5a. Also, a pad fixation device 8 on the back of the caliper 1 can be seen.

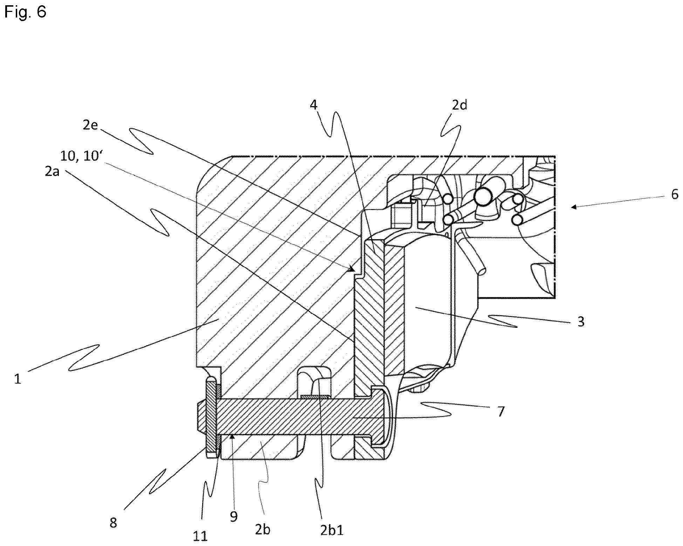

Fig. 6 shows a cross-sectional view through a caliper 1 of the embodiment according to the present invention. Herein, it can be seen that a pad backplate 4 and a brake pad 3 are arranged within a first recessed portion 2a (e.g. obtained via milling) within the caliper 1. The pad backplate rests against this first recessed portion 2a, which is adapted to receive brake forces. Above the first recessed portion 2a, the second recessed portion 2e is provided. This part, however, it not machined, and also does not receive brake forces, as there is a small gap between the pad backplate 4 and the second recessed portion 2e. Because of the first recessed portion 2a which does not fully extend the size of the pad backplate 4, less material has to be machined via milling, hence increasing the stiffness of the caliper 1. There is a step 10 between the first recessed portion 2a and the second recessed portion 2e. Also, there is a step 10' with a complementary shape in the pad backplate 4. Parts of a spreading device 6 are also shown, received in an additional recess extension 2d. In particular, this view shows a cross-sectional view of the support portion 2b with a slit 2b1. The pin is pushed through the support portion 2b, however with a little clearance, so that the brake pad 3 and the pad backplate 4 can move a little bit in the tangential (and radial) clearance to the caliper 1. On the back of the caliper 1, the pin 7 is secured with a pin fixation device 8, in this case a safety clip 8 and a washer 11. Also, a hole 9 as a through hole is provided as can be seen in this view.

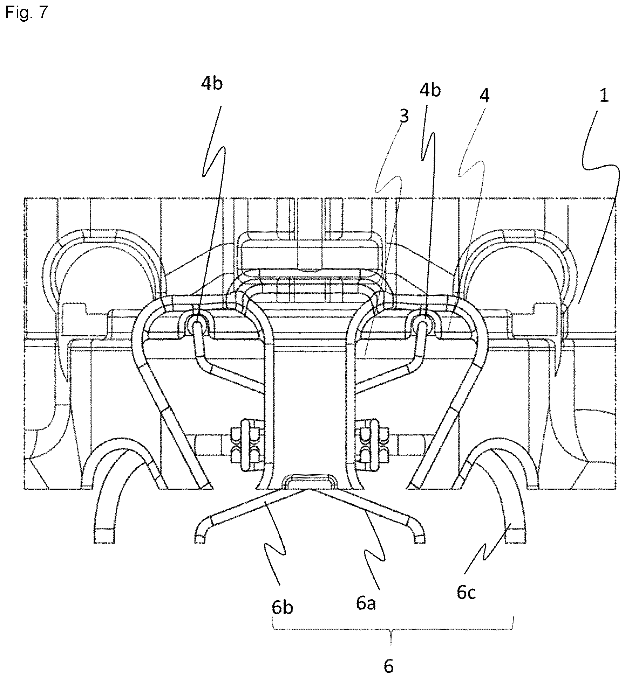

Fig. 7 shows a more detailed view of the fixation of the pad backplate 4 with the brake pad 3. Herein, holes 4b are provided in the pad backplate 4, holding a respective first spring wire 6a and a respective second spring wire 6b of the spreading device 6. The first spring wire 6a and the second spring wire 6b are fixed to a central wire 6c. The fixation of the central wire 6c spreading device 6 to the carrier is not shown in this view.

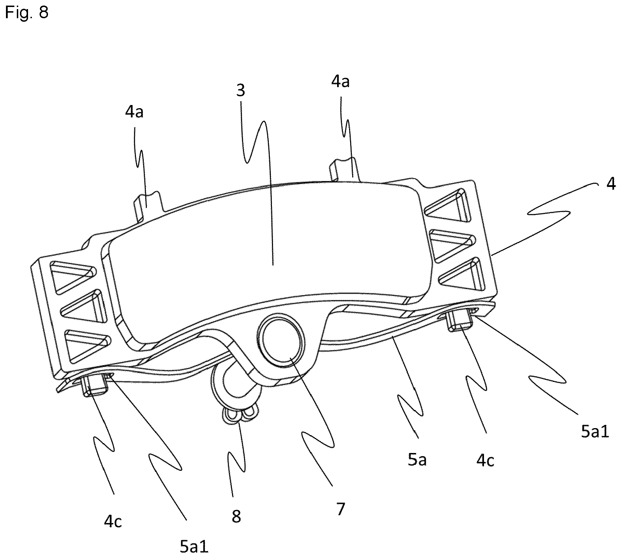

Fig. 8 shows the pad backplate 4 with the brake pad 3 mounted on it. Also, it is shown that on the other side of the pad backplate 4, two extensions 4a are provided, comprising the holes 4b (not shown in this view). Also, it can be seen that at the bottom part of the pad backplate 4, two protrusions 4c are provided, which are adapted to engage with the respective recesses 5a1 of a pad spring 5a. The pad spring is not shown in connection with the caliper 1 in this view, however, it can be seen that the pin 7 can be pushed through the pad backplate 4 and can be secured with a pin fixation device 8 on the backside.

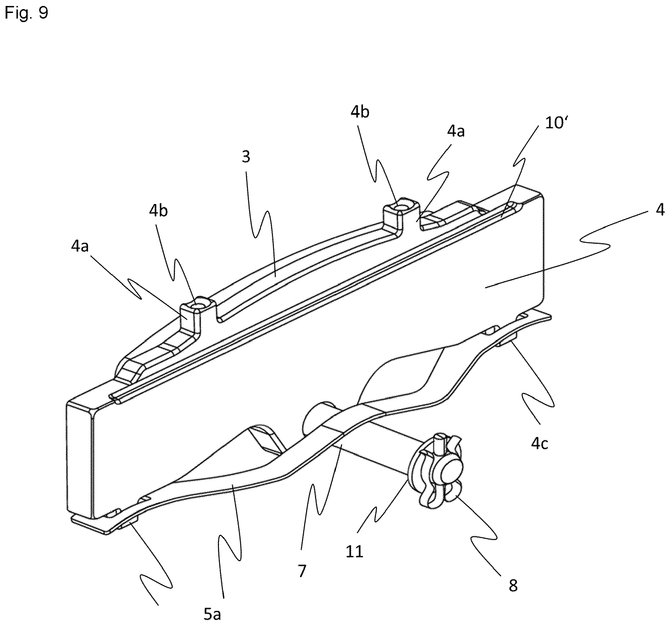

Fig. 9 shows a view from the back on the pad backplate 4. Again, it can be seen that there are protrusions 4a, which contain holes 4b for receiving the spring wires of the spreading device (not shown in this view). On the front side of the pad backplate 4, the brake pad 3 is provided. Also it can be seen that there are on the bottom side two protrusions 4c, which can engage with respective recesses 5a1 (not shown in this view) of a pad spring 5a. Also the pin 7 with the pin fixation device 8 is shown. In this view, it becomes apparent that there is a step 10' provided at the outer edges of the pad backplate 4, wherein the first recessed portion 2a and the second recessed portion 2e of the caliper 1 (not shown here) can have a complementary shape, which makes machining of the caliper easier. As in this case, the shaft mill for cutting the first recessed portion 2a in the caliper 1 (not shown here) does not need to go so deep into the caliper casting, an axial support can be provided only by the big contact surface. The protrusions 4a can be received within recess extensions 2d (not shown in this view).

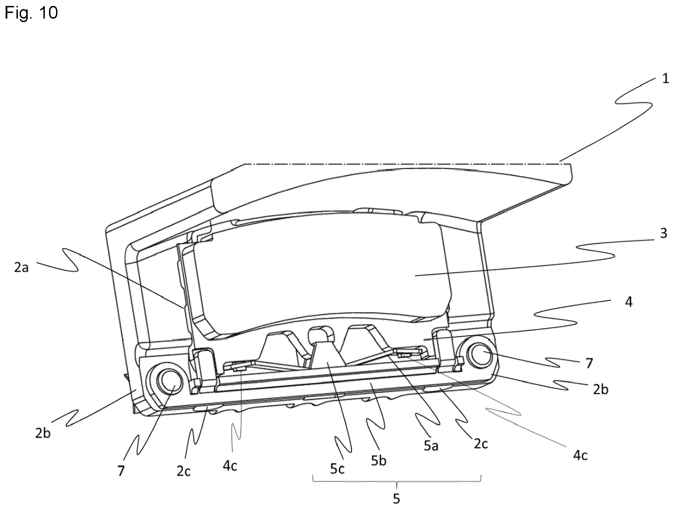

Fig. 10 shows a second embodiment according to the present invention. Herein, the caliper 1 is provided, also with a pad backplate 4 and a brake pad 3. Also, again a first recessed portion 2a (not completely shown in this figure) is provided in the caliper 1 for receiving the pad backplate 4. However, in this case, a pad retainer bracket 5b and a holding portion 5c are provided. The holding portion 5c attaches the pad spring 5a to the pad backplate 4 (so that the pad spring 5a cannot be removed from the pad backplate 4), and pushes against the retainer bracket 5b. On top of the pad retainer bracket 5b, again a pad spring 5a is provided. Also the pad retainer bracket 5b can be demounted easily in order to ensure an easy pad exchange. Two pins 7 fix the retainer bracket 5b to respective support portions 2b of the caliper 1. Also, void spaces 2c (similarly to the first embodiment) are present. Protrusions 4c of the pad backplate 4 serve for fixing the pad backplate 4 to the pad spring 5a.

The present invention is not limited to the above-mentioned embodiments.

The pin fixation device can have every shape, not necessarily a safety clip or a bolt is needed, it can also be ensured by a threading with a nut or the like. Additionally/Alternatively, an axial prestressing of the pin 7 with the help of a spring (e.g. cup spring) could be used. By this, the pin 7 would additionally prestress the pad backplate 4 against the caliper 1 in axial direction.

Also, the shape of the pad backplate 4 and the brake pad 3 can be chosen individually.

### LIST OF REFERENCE SIGNS

- 1: Caliper
- 2a: First recessed portion (pre-cast, then milled)
- 2b: Support portion
- 2b1: Slit
- 2c: Void space
- 2d: Recess extension (cast)
- 2e: Second recessed portion (not milled)
- 3: Brake pad
- 4: Pad backplate
- 4a: Extension
- 4b: Hole
- 4c: Protrusions
- 5: Pad fixation means
- 5a: Pad spring
- 5a1: Recess
- 5b: Pad retainer bracket
- 5c: Holding portion
- 6: Spreading device
- 6a: first spring wire
- 6b: second spring wire
- 6c: central wire
- 7: Pin
- 8: Pin fixation device / clip (safety clip)
- 9: Hole (through hole)
- 10: Step
- 11: Washer

- D: Disc brake
- P: Park brake
- S: Service brake
- SC: Service brake caliper
- B: Brake disc
- F: Friction Ring

## Claims

1. Disc brake (D), comprising:
a caliper (1),
a brake pad (3),
a pad backplate (4)
a first recessed portion (2a) formed in the caliper (1), the first recessed portion (2a) being adapted to receive at least a part of the brake pad (3) and/or the pad backplate (4),
wherein there is a clearance between the contours of the first recessed portion (2a) and the pad backplate (4) in the tangential direction on at least one side of the pad backplate (4),
a pad fixation means (5), which is provided on the side of the first recessed portion (2a) not pointing away from the middle axis of the disc brake (D), being adapted to push the pad backplate (4) into the radial direction pointing away from the middle axis of the disc brake (D).

2. Disc brake (D) according claim 1, wherein the pad fixation means (5) is a pad spring (5a).

3. Disc brake (D) according to claim 1 or 2, wherein the pad spring (5a) is fixed with a pin (7), which is insertable through a hole (9) provided in the caliper (1).

4. Disc brake (D) according to claim 3, wherein the pin (7) is securable with a pin fixation device (8) on the side of the caliper (1) being opposite to the brake pad (3).

5. Disc brake (D) according to claim 4, wherein the pin fixation device (8) is a bolt or a clip, optionally with a washer (11) or spring.

6. Disc brake (D) according to any one of claims 3 to 5, wherein the pin (7) has a clearance to allow the movement of the pad backplate (4) in the tangential and radial direction.

7. Disc brake (D) according to any one of claims 2 to 6, wherein the caliper (1) further comprises at least one support portion (2b), the support portion comprising a slit (2b1) for receiving the pad spring (5a).

8. Disc brake (D) according to claim 7, wherein the pad spring (5a) has two recesses (5a1), adapted to mesh with two respective protrusions (4c) of the pad backplate (4).

9. Disc brake (D) according to claim 1, wherein the pad fixation means (5) comprises a pad retainer bracket (5b).

10. Disc brake (D) according to any one of the previous claims, wherein the first recessed portion (2a) in the caliper (1) is obtained via milling.

11. Disc brake (D) according to any one of the previous claims, wherein the first recessed portion (2a) is adapted to receive the outboard brake pad (3) with its respective pad backplate (4).

12. Disc brake (D) according to any one of the previous claims, wherein a spreading device (6) is provided to connect the carrier with at least one pad backplate (4).

13. Disc brake (D) according to any one of the previous claims, further comprising a second recesses portion (2e) within the caliper (1), wherein there is a step (10) between the first recessed portion (2a) and the second recesses portion (2e), and wherein the pad backplate (4) also comprise a step (10') with complementary shape.

14. Disc brake (D) according to any one of the previous claims, further comprising a service brake (S) with respective caliper (SC), wherein the caliper (1) contains the park brake (P) and is adapted to work on a section of the friction ring (F) of the service brake (S), wherein the brake pads (3) of the park brake (P) have an increased friction coefficient compared to the brake pads of the service brake.

15. Use of a disc brake (D) according to one of claims 1 to 12 for a park brake (P), in particular without a service brake (S) included in the same caliper (1).
